# EUROPÄISCHE PATENTSCHRIFT

(11) **EP 2 025 708 B1**
(45) Veröffentlichungstag und Bekanntmachung des Hinweises auf die Patenterteilung: **14.10.2009**
(21) Anmeldenummer: 07015812.6
(22) Anmeldetag: 10.08.2007
(51) Int. Cl.: C08J 7/14, C09B 65/00, C09K 13/04, C23C 18/24

(54) **Chromfreie Beize für Kunststoffoberflächen**
Chromium-free etchant for plastic surfaces
Décapage sans chrome pour surfaces en matière synthétique

(43) Veröffentlichungstag der Anmeldung: 18.02.2009
(73) Patentinhaber: Enthone Inc., West Haven, CT 06516 (US)
(72) Erfinder: Schildmann, Mark Peter, D-42697 Solingen (DE); Werner, Christoph, Dr., D-40597 Düsseldorf (DE); Prinz, Ulrich, Dr., D-42697 Solingen (DE)
(74) Vertreter: Stenger, Watzke & Ring

(56) Entgegenhaltungen:
- EP-A- 1 001 052
- EP-A- 1 600 528

## Beschreibung

Die vorliegende Erfindung betrifft eine Beizlösung sowie ein Verfahren zum Beizen von Kunststoffoberflächen. Insbesondere betrifft die vorliegende Erfindung eine Beizlösung sowie ein Beizverfahren zum Beizen von ABS-Kunststoffoberflächen oder ABS-Blendkunststoffoberflächen vor einer anschließenden Metallisierung dieser Oberflächen.

Kunststoffoberflächen werden vielfach aus technischen oder dekorativen Gründen mit geeigneten Metallschichten beschichtet. Dies kann im Fall von technisch bedingten Beschichtungen beispielsweise erfolgen, um elektrisch leitfähige Strukturen auf den Kunststoffoberflächen auszubilden. Im Fall der dekorativen Beschichtungen von Kunststoffoberflächen werden so hochwertig erscheinende Kunststoffoberflächen gebildet. Insbesondere im Bereich der Automobilfertigung sind dekorativ metallisierte Kunststoffoberflächen vielfach verbreitet. Im Bereich der Elektronik und Elektrotechnik werden mittels geeigneter Verfahren durch Metallabscheidung beispielsweise leitfähige Strukturen auf Kunststoffplatinen zur Ausbildung integrierter Schaltungen abgeschieden.

Für die Haltbarkeit der auf den Kunststoffoberflächen abgeschiedenen Metallschichten ist es von entscheidender Bedeutung, dass diese eine hinreichende Haftfestigkeit auf den Kunststoffoberflächen aufweisen. Zur Ausbildung einer entsprechenden Haftfestigkeit ist es daher im Stand der Technik üblich, die Kunststoffoberflächen vor einer entsprechenden Metallabscheidung aufzurauen, um eine hinreichende Haftfestigkeit der abgeschiedenen Metallschichten gewährleisten zu können. Hierzu sind aus dem Stand der Technik unterschiedliche Verfahren bekannt. Typischerweise werden Kunststoffoberflächen mit Chrom(VI)-haltigen Beizlösungen behandelt. Solche Beizlösungen auf Chromschwefelsäurebasis können beispielsweise Chrom(VI)-oxid und Schwefelsäure in einem Gewichtsverhältnis 1 : 1 aufweisen.

Beim Eintauchen der Kunststoffoberfläche in eine solche Chromschwefelsäurebeize wird die Polybutadienkomponente an der Kunststoffoberfläche oxidativ abgebaut und hinterlässt Hohlräume an der Oberfläche, welche als entsprechende Verankerungen für die abgeschiedenen Metallschichten dienen. Es wird vermutet, dass die Adhäsion durch diesen Verankerungseffekt entsteht.

Chrom(VI)-haltige Verbindungen stehen jedoch im Verdacht krebserregend zu sein, so dass der Umgang mit diesen Verbindungen strengen Umweltschutzbestimmungen unterliegt. Auf Grund des von Chrom(VI) freisetzenden Verbindungen ausgehenden Gefährdungspotenzials ist sogar ein Verbot der gewerblichen Nutzung von Chrom(VI)-haltigen Verbindungen nicht auszuschließen.

Eine Alternative zu den genannten Chrom(VI)-haltigen Beizen für Kunststoffoberflächen bilden Beizen auf Basis von Alkalipermanganaten. Hierzu werden Beizlösungen auf Basis von Alkalipermanganaten, bevorzugt Kaliumpermanganat, und einer Mineralsäure wie beispielsweise Phosphorsäure verwendet.

Die so erstellten Beizlösungen sind frei von Chrom(VI)-haltigen Verbindungen und zeigen eine gute Beizwirkung für Kunststoffoberflächen, insbesondere aus ABS-Kunststoffen.

Beizen auf Basis von Alkalipermanganaten weisen typischerweise bis zu 20 g/l Alkalipermanganat in entsprechenden Mineralsäurelösungen wie beispielsweise einer 40 bis 85-%igen Phosphorsäure auf.

Das eingesetzte Alkalipermanganat unterliegt jedoch einer rapiden Selbstzersetzung, so dass die Beizwirkung einer frisch angesetzten Alkalipermanganatbeize schon nach einigen Stunden nicht mehr hinreichend ist. Als Abbauprodukt der Alkalipermanganate entstehen offensichtlich neben Mangan(II) kolloidale Mangan(IV)-Verbindungen, welche sich weder filtrieren noch abzentrifugieren lassen. Die an Beizwirkung verlorene Beize lässt sich durch Zusatz von Alkalipermanganat nachschärfen. Hierbei reichem sich jedoch die kolloidalen Mangan(IV)-Abbauprodukte, Mangan(II)-lonen sowie die Alkali-lonen in der Beizlösung weiter an. Infolge der Anreicherung kommt es zu einer Erhöhung der Viskosität der Beize, bis schließlich ein Punkt erreicht wird, an welchem die Beizlösung verworfen werden muss, da keine befriedigenden Beizergebnisse mehr erreicht werden können.

Ein weiterer Nachteil der beschriebenen Alkalipermanganatbeizen ist das kolloidale Auftreten der Abbauprodukte. Da, wie zuvor beschrieben, diese Abbauprodukte weder abfiltriert noch abzentrifugiert werden können findet vielfach eine Verschleppung der kolloidalen Mangan(IV)-Verbindungen über den gesamten Beschichtungsprozess der Kunststoffoberflächen statt.

Diese Verschleppung kann jedoch zu einer starken Beeinträchtigung des Abscheideprozesses führen, so dass schließlich fehlerhafte oder anderweitig unzulängliche Metallschichten abgeschieden werden.

Es ist daher die **Aufgabe** der vorliegenden Erfindung, eine chromfreie Beizlösung für Kunststoffoberflächen zur Verfügung zu stellen, welche die aus dem Stand der Technik bekannten Probleme bei der Verwendung von Alkalipermanganatbeizen zu überwinden vermag. Darüber hinaus ist es Aufgabe der vorliegenden Erfindung, ein geeignetes Verfahren zum Beizen von Kunststoffoberflächen, insbesondere von ABS-Kunststoffen und ABS-Blends, bereitzustellen.

**Gelöst** wird diese Aufgabe hinsichtlich der Beizlösung durch eine Beizlösung zur vorbereitenden Oberflächenbehandlung von Kunststoffoberflächen, aufweisend Mn(VII)-lonen sowie eine anorganische Säure, welche dadurch gekennzeichnet ist, dass die Beizlösung im Wesentlichen frei von Alkali- und Erdalkali-lonen ist, und wobei diese Mn(VII)-lonen in einer Konzentration zwischen 0,001 und 0,5 mol/l aufweist, wobei die Mn(VII)-lonen mittels einer Oxidationszelle aus einer Mn(II)-ionenhaltigen Lösung gewonnen werden.

Als anorganische Säure weist die erfindungsgemäße Beizlösung eine Säure der Gruppe bestehend aus Phosphorsäure, Peroxomonophosphorsäure, Peroxodiphosphorsäure, Peroxomonoschwefelsäure, Peroxodischwefelsäure, Sulfonsäuren wie beispielsweise Methan-, Ethansulfonsäure, Methandi- oder Ethandisulfonsäure oder anders substituierte Sulfonsäuren- oder Schwefelsäure auf.

Die Konzentration der in der Beizlösung enthaltenen Mn(VII)-lonen liegt erfindungsgemäß in einem Bereich zwischen 0,001 und 0,5 mol/l. Hierbei kann die Konzentration der anorganischen Säure der genannten Gruppe zwischen 1 und 18,5 mol/l betragen.

Neben Mn(VII)-lonen kann die Beizlösung erfindungsgemäß weitere lonen zur Unterstützung des Beizprozesses aufweisen. Hierzu sind insbesondere geeignet Silber(I)-, Bismut(V)-, Vanadium(V)-, Molybdän(VI)-, Kupfer(III)-lonen oder Mischungen dieser. Die Konzentration dieser weiteren lonen kann erfindungsgemäß in einem Bereich zwischen 0,001 und 2 mol/l liegen.

Darüber hinaus kann die erfindungsgemäße Beizlösung weitere Additive wie beispielsweise Netzmittel oder Entschäumer aufweisen.

Der pH-Wert der erfindungsgemäßen Beizlösung liegt in einem Bereich ≤ pH 1.

Die in der Beizlösung enthaltenen Mn(VII)-Ionen werden erfindungsgemäß mittels anodischer Oxidation in einer Oxidationszelle aus einer Mn(II)-ionenhaltigen Lösung gewonnen. Die Mn(II)-haltige Lösung wird durch Auflösen eines geeigneten Mangan(II)-Salzes in einer Säurelösung hergestellt. Geeignete Mangan(II)-Salze sind beispielsweise MnCO₃, MnSO₄, MnO, MnCl₂ und Mn(NO₃)₂ oder Mischungen hiervon.

Als Säure weist die zur oxidativen Gewinnung von Mn(VII)-lonen eingesetzte saure Lösung eine Säure der Gruppe bestehend aus Phosphorsäure, Peroxomonophosphorsäure, Peroxodiphosphorsäure, Peroxomonoschwefelsäure, Peroxodischwefelsäure, Sulfonsäuren beispielsweise wie Methan-, Ethansulfonsäure, Methandi- oder Ethandisulfonsäure oder anders substituierte Sulfonsäuren oder Schwefelsäure auf. In einer vorteilhaften Ausgestaltung der Erfindung entspricht die in der Lösung zur oxidativen Gewinnung von Mn(VII)-lonen eingesetzte Säure der in der Beize enthaltenen Säure.

Die Gewinnung der Mn(VII)-lonen sowie der Beizprozess können erfindungsgemäß in einer Oxidationszelle erfolgen. Die hierzu eingesetzte Oxidationszelle weist einen Anodenraum und einen Katodenraum auf, welche über ein Diaphragma oder eine entsprechend lonen durchgängige Membran voneinander getrennt sind. Als Anode eignen sich Mischoxidelektroden wie beispielsweise eine Iridium/Ruthenium-Mischoxid beschichtete Titanelektrode. Alternativ sind auch diamantbeschichtete Niobanoden, PbO₂ und/oder SnO₂ beschichtete Anoden oder Bleilegierungesanoden geeignet. Das verwendete Anodenmaterial muss eine hinreichend hohe Sauerstoffüberspannung aufweisen, um eine Oxidation von Mn(II) zu Mn(VII) zu ermöglichen. Als Katodenmaterial sind oxidationsfeste Elektroden wie beispielsweise solche aus rostfreiem Stahl geeignet. Voraussetzung für das eingesetzte Katodenmaterial ist, dass dieses gegenüber der in der Beizlösung enthaltenen Säure beständig ist.

Der Anolyt kann aus einer konzentrierten Mineralsäure und einer darin gelösten Mn(II)-lonen freisetzenden Verbindung bestehen. Eine geeignete Anolytlösung besteht beispielsweise aus 0,1 bis 0,3 mol/l Mangancarbonat in einer 85 %-igen Phosphorsäure.

Der Katolyt kann erfindungsgemäß aus einer entsprechend verdünnten Mineralsäure, wie beispielsweise einer 50 %-igen Phosphorsäurelösung bestehen. Durch Anlegen einer Stromdichte von 1 bis 5 A/dm² werden galvanisch oxidativ Mn(VII)-lonen gebildet.

Zur oxidativen Bildung der Mn(VII)-lonen hat sich eine Anodenoberfläche von 0,5 bis 3 dm² pro Liter Anolyt als geeignet erwiesen. Die anodische Oxidation lässt sich vorteilhafterweise durch das Anlegen eines Revers-Puls-Stromes in ihrem Wirkungsgrad steigern.

Die so im Anolyten gebildete Beizlösung weist eine hinreichende Permanganatkonzentration auf, um Kunststoffoberflächen wie beispielsweise solche von ABS-Kunststoffen oder ABS-Blends zu beizen. Als mögliche Gegenionen der in der Beizlösung befindlichen Permanganat-lonen weist die Beizlösung an sich lediglich H⁺ und Mn(II) lonen auf.

Die erfindungsgemäß gebildete Beizlösung behält bei Raumtemperatur über viele Tage ihre violette Färbung, was auf eine große Stabilität der Beizlösung hinweist. Demgegenüber verlieren Alkalipermanganatbeizen innerhalb von 24 Stunden völlig ihre violette Färbung sowie ihre Beizwirkung.

Es ist zu vermuten, dass nicht nur das gebildete Permanganat zur Beizwirkung beiträgt, sondern das ebenfalls in der Beizlösung durch den oxidativen Prozess Peroxomonophosphorsäure und/oder Peroxodiphosphorsäure gebildet werden, sowie das Mangan in sämtlichen Oxidationsstufen zwischen +2 und +7 auftritt. Ein Hinweis für diese Annahme ist die Farbveränderung der Beizlösung von klar-violett in der Startphase der galvanischen Oxidation über dunkelrot bis zu braun im weiteren Verlauf des anodischen Oxidationsprozesses.

Hinsichtlich des Verfahrens wird die Aufgabe der Erfindung durch ein Verfahren zum Beizen von Kunststoffoberflächen gelöst, aufweisend den Verfahrensschritt:
- Kontaktieren der zu beizenden Kunststoffoberfläche mit einer alkali- und erdalkalifreien, sauren Mn(VII)-lonen aufweisenden Behandlungslösung.

In einer Ausgestaltung des erfindungsgemäßen Verfahrens erfolgt die Kontaktierung der zu beizenden Kunststoffoberfläche mit der alkali- und erdalkalifreien, sauren Mn(VII)-lonen aufweisenden Behandlungslösung in einer aus einem Anodenraum und einem Katodenraum gebildeten Vorrichtung, dadurch, dass die zu beizende Kunststoffoberfläche in dem Anodenraum bzw. einem mit dem Anodenraum hydraulisch verbundenen Arbeitsbehälter mit der alkali- und erdalkalifreien sauren Mn(VII)-lonen aufweisenden Behandlungslösung kontaktiert wird, wobei der Anodenraum mit einer sauren, eine Mn(II)-lonen freisetzende Verbindung aufweisende Lösung gefüllt ist und die beiden Elektrodenräume über ein Diaphragma oder eine entsprechende lonen durchgängige Membran voneinander getrennt sind und die in der Beizlösung enthaltenen Mn(VII)-lonen durch anodische Oxidation mittels Anlegen einer geeigneten Spannung gebildet werden.

Bedingt durch die Selbstzersetzung und insbesondere durch das Beizen der Kunststoffteile kommt es zu einem Abfall der Permanganatkonzentration in der Beizlösung. Hierbei sind die nachfolgenden Gleichungen zu berücksichtigen.
Gleichung 1:

   4MnO₄⁻ + 4H⁺ → 4MnO₂ + 2H₂O + 3O₂ ↑
Gleichung 2:

   MnO₄⁻ + 8H⁺ + 5e- → Mn²⁺+4H₂O
Gleichung 3:

   3Mn²⁺ + 2MnO₄ + 2H₂O → 5MnO₂ + 4H⁺
Gleichung 4:

   4MnO₄⁻ + 12H⁺ → 4Mn²⁺ + 6H₂O + 5O₂↑

Das gebildete Mn(II) kann aufoxidiert werden. Der gebildete Braunstein muss jedoch abgetrennt werden, da dieser einen negativen Einfluss auf das weitere Beschichtungsverfahren besitzt. Braunstein fällt in der erfindungsgemäßen Beize als fein verteilte Substanz an. Denkbare Modifikationen sind Nsutit [(Mn(IV), Mn(II)) (OOH)₂] oder Todorokit [Mn(IV), Mn(II))₈ (OOH)₁₆ + 2 H₂O]. Die gebildeten Mn(IV)-Verbindungen können abfiltriert oder anderweitig abgetrennt werden. Der so gewonnene Rückstand kann mittels eines geeigneten Reduktionsmittels wie beispielsweise Oxalsäure, Ascorbinsäure oder auch Wasserstoffperoxid in einer stöchiometrischen oder leicht unterstöichiometrischen Menge gereinigt werden. Hierbei wird das Reduktionsmittel vorteilhafterweise mittels einer Dosierpumpe als konzentrierte Lösung zugesetzt.

Durch den Zusatz des Reduktionsmittels werden die unlöslichen Mn(IV)-Verbindungen in lösliche Mn(II)-Verbindungen überführt. Die so gewonnenen Mn(II)-Verbindungen können als Edukt wieder der anodischen Oxidation zugeführt werden.

Hierdurch wird in vorteilhafter Weise ein geschlossener Stoffkreislauf geschaffen.

Es wurde festgestellt, dass durch Zusatz weiterer lonen wie beispielsweise Ag (I). Bi(V), V(V), Mo(VI), oder Cu(II) Ti(II), Au(I), Fe(II), Ce(III), Sb(II), oder anderer Redoxmediatoren der Wirkungsgrad der anodischen Oxidation gesteigert werden konnte.

### Ausführungsbeispiel:

1. Ein spritzgegossenes Bauteil aus einem handelsüblichen ABS-Kunststoff in Galvanoqualität, z.B. "Novodur P2 MC" der Firma Lanxess, Leverkusen, wird bei 60°C für 10 min. in einer Lösung aus 0,1266 mol/l Mn(II)-lonen, gelöst in konzentrierter ortho-Phosphorsäure mit w(H₃PO₄)=0,85, in der mindestens 0,025 mol/l Mn(VII)-Ionen anodisch erzeugt worden sind, gebeizt. Durch diese Beizbehandlung wird die Oberfläche in der Weise chemisch geätzt, dass die zur Ausbildung einer guten Haftfestigkeit notwendigen Kavernen entstehen. Zusätzlich werden gegenüber einer Chromschwefelsäurebeizbehandlung mehr sauerstoffhaltige Oberflächengruppen wie -COOH, -COH, -CO erzeugt, die die Oberfläche hydrophiler gestalten und die Anlagerung von Palladium begünstigen. Die so vorbereitete Oberfläche kann sodann - wie nach dem Beizen in Chromschwefelsäurelösung - mit den dem Fachmann bekannten Verfahrensschritten metallisiert werden. Dazu kommen alle bekannten Metallisierungssysteme in Betracht, beispielsweise seien hier die kolloidale Aktivierung, die ionogene Aktivierung und die Direktmetallisierungssysteme genannt. Die abgeschiedenen Schichten sind frei von Delaminationen und weisen eine gute Haftfestigkeit auf.

## Patentansprüche

1. Beizlösung zur vorbereitenden Oberflächenbehandlung von Kunststoffoberflächen, aufweisend Mn(VII)-lonen sowie eine anorganische Säure, **dadurch gekennzeichnet, dass** die Beizlösung im Wesentlichen frei von Alkali- und Erdalkali-lonen ist, und wobei diese Mn(VII)-lonen in einer Konzentration zwischen 0,001 und 0,5 mol/l aufweist, wobei die Mn(VII)-lonen mittels einer Oxidationszelle aus einer Mn(II)-ionenhaltigen Lösung gewonnen werden.

2. Beizlösung gemäß Anspruch 1, wobei diese als anorganische Säure eine Säure der Gruppe bestehend aus Phosphorsäure, Peroxomonophosphorsäure, Peroxodiphosphorsäure, Peroxomonoschwefelsäure, Peroxodischwefelsäure, Sulfonsäuren oder Schwefelsäure aufweist.

3. Beizlösung gemäß einem der vorhergehenden Ansprüche, wobei dieser als Sulfonsäure Methan-, Ethansulfonsäure, Methandi- oder Ethandisulfonsäure oder anders substituierte Sulfonsäuren aufweist.

4. Beizlösung nach einem der vorhergehenden Ansprüche, wobei diese die anorganische Säure in einer Konzentration zwischen 1 und 18,5 mol/l aufweist.

5. Beizlösung gemäß einem der vorhergehenden Ansprüche, wobei diese Ionen der Gruppe bestehend aus Ag(I), Bi(V), V(V), Mo(VI), Cu(II), Ti(II), Au(I), Fe(II), Ce(III), Sb(II), oder anderer Redoxmediatoren oder Mischungen dieser aufweist.

6. Beizlösung gemäß Anspruch 5, wobei diese die Ionen der Gruppe bestehend aus Ag(I), Bi(V), V(V), Mo(VI), Cu(II) Ti(II), Au(I), Fe(II), Ce(III), Sb(II), oder Mischungen dieser in einer Konzentration zwischen 0,001 und 2,0 mol/l aufweist.

7. Beizlösung gemäß einem der vorhergehenden Ansprüche, wobei diese ein Netzmittel aufweist.

8. Beizlösung gemäß einem der vorhergehenden Ansprüche, wobei diese einen Entschäumen aufweist.

9. Beizlösung gemäß einem der vorhergehenden Ansprüche, wobei die Lösung zur oxidativen Gewinnung von Mn(VII)-lonen eine saure Lösung ist.

10. Beizlösung gemäß einem der vorhergehenden Ansprüche, wobei die Lösung zur oxidativen Gewinnung von Mn(VII)-lonen als Mn(II)-Quelle eine Manganverbindung der Gruppe bestehend aus MnCO₃, MnSO₄, MnO, MnCl₂ und Mn(NO₃)₂ aufweist.

11. Beizlösung gemäß einem der Ansprüche 9 und 10, wobei die Lösung zur oxidativen Gewinnung von Mn(VII)-lonen eine Säure der Gruppe bestehend aus Phosphorsäure, Peroxomonophosphorsäure, Peroxodiphosphorsäure, Peroxomonoschwefelsäure, Peroxodischwefelsäure, Methan-, Ethansulfonsäure, Methandi- oder Ethandisulfonsäure oder anders substituierte Sulfonsäuren oder Schwefelsäure aufweist.

12. Verfahren zum Beizen von ABS-Kunststoffoberflächen, aufweisend den Verfahrensschritt:
- Kontaktieren der zu beizenden Kunststoffoberfläche mit einer alkati- und erdalkalifreien, sauren Mn(VII)-lonen aufweisenden Behandlungslösung.

## Claims

1. Etching solution for preparatory surface treatment of plastics surfaces, including Mn(VII) ions as well as an inorganic acid, **characterised in that** the etching solution is substantially free of alkali ions and alkaline earth ions, and wherein this solution includes Mn(VII) ions in a concentration between 0.001 and 0.5 mol/l, the Mn(VII) ions being obtained from a solution containing Mn(II) ions by means of an oxidation cell.

2. Etching solution as claimed in Claim 1, wherein the solution includes as inorganic acid an acid from the group consisting of phosphoric acid, peroxomonophosphoric acid, peroxodiphosphoric acid, peroxomonosulphuric acid, peroxodisulphuric acid, sulphonic acids or sulphuric acid.

3. Etching solution as claimed in any one of the preceding claims, wherein the solution includes as sulphonic acid methanesulphonic acid, ethanesulphonic acid, methanedisulphonic acid or ethanedisulphonic acid or otherwise substituted sulphonic acids.

4. Etching solution as claimed in any one of the preceding claims, wherein the solution includes the inorganic acid in a concentration between 1 and 18.5 mol/l.

5. Etching solution as claimed in any one of the preceding claims, wherein this solution includes ions from the group consisting of Ag(I), Bi(V), V(V), Mo(VI), Cu(II). Ti(II), Au(I), Fe(II), Ce(III), Sb(II) or other redox mediators or mixtures thereof.

6. Etching solution as claimed in Claim 5, wherein the solution includes ions from the group consisting of Ag(I), Bi(V), V(V), Mo(VI), Cu(II). Ti(II), Au(I), Fe(II), Ce(III), Sb(II), or mixtures thereof in a concentration between 0.001 and 2.0 mol/l.

7. Etching solution as claimed in any one of the preceding claims, wherein the solution includes a wetting agent.

8. Etching solution as claimed din any one of the preceding claims, wherein the solution includes a defoaming agent.

9. Etching solution as claimed in any one of the preceding claims, wherein the solution for the oxidative production of Mn(VII) ions is an acidic solution.

10. Etching solution as claimed in any one of the preceding claims, wherein the solution for the oxidative production of Mn(VII) ions includes as a source of Mn(II) ions a manganese compound from the group consisting of MnCO₃, MnSO₄, MnO, MnCl₂ and Mn(NO₃)₂.

11. Etching solution as claimed in either Claim 9 or Claim 10, wherein the solution for the oxidative production of Mn(VII) ions includes at least one acid from the group consisting of phosphoric acid, peroxomonophosphoric acid, peroxodiphosphoric acid, peroxomonosulphuric acid, peroxodisulphuric acid, methanesulphonic acid, ethanesulphonic acid, methanedisulphonic acid or ethanedisulphonic acid or otherwise substituted sulphonic acids or sulphuric acid.

12. Method of etching ABS plastics surfaces, including the method step:
- contacting the plastics surface to be etched with an acidic treatment solution which includes Mn(VII) ions and is free of alkali and alkaline earth ions.

## Revendications

1. Solution de décapage pour le traitement préparatoire de surfaces en plastique, contenant des ions Mn(VII) ainsi qu'un acide inorganique, **caractérisée en ce que** la solution de décapage est pour l'essentiel dépourvue d'ions de métaux alcalins et alcalinoterreux, et **en ce qu'**elle contient ces ions Mn(VII) à une concentration comprise entre 0,001 et 0,5 mol/l, dans laquelle les ions Mn(VII) sont obtenus au moyen d'une cellule d'oxydation à partir d'une solution contenant des ions Mn(II).

2. Solution de décapage selon la revendication 1, qui contient comme acide inorganique un acide faisant partie du groupe comprenant l'acide phosphorique, l'acide peroxomonophosphorique, l'acide peroxodiphosphorique, l'acide peroxomonosulfurique, l'acide peroxodisulfurique, les acides sulfoniques ou l'acide sulfurique.

3. Solution de décapage selon l'une des revendications précédentes, qui contient comme acide sulfonique de l'acide méthanesulfonique, éthanesulfonique, méthanedisulfonique ou éthanedisulfonique ou des acides sulfoniques substitués d'une autre manière.

4. Solution de décapage selon l'une des revendications précédentes, qui contient l'acide inorganique à une concentration comprise entre 1 et 18,5 mol/l.

5. Solution de décapage selon l'une des revendications précédentes, qui contient des ions faisant partie du groupe comprenant Ag(I), Bi(V), V(V), Mo(VI), Cu(II), Ti(II), Au(I), Fe(II), Ce(III), Sb(II) ou d'autres médiateurs d'oxydoréduction ou des mélanges de ceux-ci.

6. Solution de décapage selon la revendication 5, qui contient les ions faisant partie du groupe comprenant Ag(I), Bi(V), V(V), Mo(VI), Cu(II) Ti(II), Au(I), Fe(II), Ce(III), Sb(II) ou des mélanges de ceux-ci à une concentration comprise entre 0,001 et 2,0 mol/l.

7. Solution de décapage selon l'une des revendications précédentes, qui contient un agent mouillant.

8. Solution de décapage selon l'une des revendications précédentes, qui contient un agent anti-mousse.

9. Solution de décapage selon l'une des revendications précédentes, dans laquelle la solution pour l'obtention par voie oxydative d'ions Mn(VII) est une solution acide.

10. Solution de décapage selon l'une des revendications précédentes, dans laquelle la solution pour l'obtention par voie oxydative d'ions Mn(VII) présente comme source d'ions Mn(II) un composé de manganèse faisant partie du groupe comprenant MnCO₃, MnSO₄ MnO, MnCl₂ et Mn(NO₃)₂.

11. Solution de décapage selon l'une des revendications 9 et 10, dans laquelle la solution pour l'obtention par voie oxydative d'ions Mn(VII) contient un acide faisant partie du groupe comprenant l'acide phosphorique, l'acide peroxomonophosphorique, l'acide peroxodiphosphorique, l'acide peroxomonosulfurique, l'acide peroxodisulfurique, l'acide méthanesulfonique, l'acide éthanesulfonique, l'acide méthanedisulfonique ou l'acide éthanedisulfonique ou des acides sulfoniques substitués d'une autre manière ou l'acide sulfurique.

12. Procédé de décapage de surfaces en plastique ABS, comprenant l'étape de :
- mise en contact de la surface en plastique à décaper avec une solution de traitement acide sans métaux alcalins ou alcalinoterreux et contenant des ions Mn(VII).
